# EUROPÄISCHE PATENTSCHRIFT

(11) **EP 1 563 358 B1**
(45) Veröffentlichungstag und Bekanntmachung des Hinweises auf die Patenterteilung: **10.10.2007**
(21) Anmeldenummer: 03767405.8
(22) Anmeldetag: 05.11.2003
(51) Int. Cl.: G06F 21/02

(54) **VERFAHREN ZUR SICHEREN ÜBERPRÜFUNG EINES SPEICHERBEREICHES EINES MIKROCONTROLLERS IN EINEM STEUERGERÄT UND STEUERGERÄT MIT EINEM GESCHÜTZTEN MIKROCONTROLLER**
METHOD FOR THE SECURE CHECKING OF A MEMORY REGION OF A MICROCONTROLLER IN A CONTROL DEVICE AND CONTROL DEVICE WITH A PROTECTED MIKROCONTROLLER
PROCEDE DE CONTROLE SECURISE D'UNE ZONE DE MEMOIRE D'UN MICROCONTROLEUR FAISANT PARTIE D'UN DISPOSITIF DE COMMANDE, ET DISPOSITIF DE COMMANDE POURVU D'UN MICROCONTROLEUR PROTEGE

(30) Priorität: 07.11.2002 DE 10251839
(43) Veröffentlichungstag der Anmeldung: 17.08.2005
(73) Patentinhaber: ROBERT BOSCH GMBH, 70442 Stuttgart (DE)
(72) Erfinder: SCHNEIDER, Klaus, 71640 Ludwigsurg (DE); AUE, Axel, 70825 Korntal-Muenchingen (DE)
(86) Internationale Anmeldenummer: PCT/DE2003/003692
(87) Internationale Veröffentlichungsnummer: WO 2004/042592

(56) Entgegenhaltungen:
- EP-A- 1 197 826
- DE-A- 19 723 332
- US-B1- 6 286 101

## Beschreibung

### STAND DER TECHNIK

Die Erfindung betrifft ein Verfahren zur Steuerung eines Mikrocontrollers in einem Steuergerät in einem Kraftfahrzeug mit einem Rechnerkern, wenigstens einem Nur-Lese-Speicherbereich und wenigstens einem wiederbeschreibbaren Speicherbereich, wobei in dem wiederbeschreibbaren Speicherbereich zumindest ein Steuerprogramm gespeichert ist, welches zur Verarbeitung durch den Rechnerkern vorgesehen ist.

Weiterhin bezieht sich die Erfindung noch auf ein derartiges Steuergerät für ein Kraftfahrzeug mit einem Mikrocontroller.

Als Kraftfahrzeuge werden hier Fahrzeuge mit einer Brennkraftmaschine, welche mittels Steuergräten steuerbar ist, im weitesten Sinn verstanden. Derartige Steuergeräte werden in der Fahrzeugtechnik für vielfältige Funktionen verwendet, wie beispielsweise als Motorsteuergerät. Dabei wird zum Beispiel beim Chip-Tuning von Motorsteuergeräten häufig der nicht-flüchtige, aber mehrfach beschreibbare Speicher (z.B. Flash) manipuliert. Die dort gespeicherten Daten werden so verändert, dass eine höhere Motorleistung erreicht wird. Aus dem Stand der Technik sind auch Verfahren zur Steuerung der Mikrocontroller bekannt, die Überprüfungsroutinen beim Start und/oder während der Laufzeit des Steuergeräteprogramms aktivieren. Darüber hinaus werden derartige Steuergeräte auch zur Steuerung von Getrieben oder ABS-Systemen eingesetzt.

Aus der EP 1197 826 A, der DE 197 23 332 A und der US 6,286,101 sind bereits Verfahren zur Steuerung eines Mikrocontrollers bekannt.

Aus der deutschen Offenlegungsschrift DE 197 53 730 ist ein Verfahren und eine Vorrichtung zum Steuern einer Brennkraftmaschine bekannt. Die Vorrichtung umfasst wenigstens einen Mikroprozessor, wenigstens einen programmierbaren Speicher und einen wieder beschreibbaren Speicher. In dem wiederbeschreibbaren Speicher sind Programme und/oder Daten abgelegt, die vom Mikroprozessor verarbeitet werden. Die Programme werden erst nach einer Prüfung abgearbeitet. Nimmt der Inhalt eines programmierbaren Speichers einen ersten Wert an, wird das Programm ohne weitere Prüfung abgearbeitet, anderenfalls erfolgt wenigstens eine weitere Prüfung. Mit diesem Verfahren soll erreicht werden, dass ein Datensatz, der veränderte Daten und/oder Programme enthält, oder der nicht vom Steuergerätehersteller freigegeben wurde, auf einem Seriensteuergerät lauffähig ist. Gleichzeitig soll der Kraftfahrzeughersteller die Möglichkeit haben, Steuergeräte zu applizieren, dass heißt, Datensätze in einzelnen Steuergeräten zu verändern, ohne dass er Kenntnis von den Prüfungen hat. Problematisch ist hierbei der Schutz des Inhaltes des programmierbaren Speichers.

In der DE 197 23 332 A1 wird ein Verfahren zum Schutz eines Mikrorechners gegen Manipulation seines Programms und ein derart geschützter Mikrorechner beschrieben. Der Mikrorechner weist einen Rechnerkern, einen nur Lesespeicher und einen wiederbeschreibbaren Speicher auf. Im nur Lesespeicher ist ein Überprüfungsprogramm gespeichert, das mittels eines Schlüssels aus dem Speicherinhalt des wiederbeschreibbaren Speichers ein Codewort bildet. Das Codewort wird dann mit einem Vergleichscodewort verglichen, das ebenfalls im wiederbeschreibbaren Speicher abgelegt ist. In Abhängigkeit von diesem Vergleich wird der Mikrorechner gesperrt oder freigegeben.

Bei den bekannten Verfahren ist auch bei Verwendung eines geschützten, internen Flashbereich nur ein Schutz möglich, wenn die Anwendung nur diesen und keinen externen Speicher benötigt. Da die Anwendungen jedoch meist einen externen Speicher verwenden, wirkt der eingebaute Manipulationsschutz in diesen Anwendungen nicht - bzw. ist zu umgehen. Weiterhin ist eine Manipulation der Überprüfungsroutinen dann möglich, wenn Controller ohne internen, geschützten Speicher eingesetzt werden. Im einfachsten Fall wird der Aufruf dieser Routinen verhindert.

Wenn dagegen diese Überprüfungsroutinen in einem nicht änderbaren Bereich im Controller abgelegt werden (z.B. ROM), so bedeutet dies zum einen eine Kostensteigerung, zum anderen eine geringere Flexibilität in der Wahl der Algorithmen. Außerdem ist dabei auch oft ein ROM in der entsprechenden Controllertechnologie nicht realisierbar. Selbst wenn ein ROM verfügbar ist, bleiben die Probleme, die grundsätzlich bei der Verwendung eines großen ROM-Bereiches zu beachten sind. Eine Änderung des Programmcodes ist sehr teuer, da jeweils neue Masken erforderlich sind. Wenn Code geändert werden muss, dauert es mindestens 4 Monate, bis der neue Code im Projekt einsetzbar ist (Liniendurchlaufzeit). Bei einem kundenspezifischen Code benötigt entweder jeder Kunde sein eigenes ROM, oder das ROM muss entsprechend vergrößert werden. Beides führt zu Mehrkosten, die nicht im Interesse des Kunden und des Halbleiterherstellers liegen. Auch hier ist ungelöst, wie die Ausführung des Codes erzwungen werden kann.

Die Problematik, die der vorliegenden Erfindung zugrunde liegt, besteht daher darin, ein Verfahren zur Überprüfung von Speichern eines Mikrocontrollers in einem Steuergerät zu schaffen, welches besser gegen unerlaubte Eingriffe schützt. Weiterhin besteht die Aufgabe darin, bei einem Mikrocontroller in einem Steuergerät die unerlaubte Manipulation von Speicherinhalten wirkungsvoller zu verhindern.

### VORTEILE DER ERFINDUNG

Das erfindungsgemäße Verfahren umfasst die folgenden Schritte: Speicherung eines Überprüfungsprogramms in einem einmal beschreibbaren Speicherbereich des wiederbeschreibbaren Speicherbereiches, Speicherung eines Serviceprogramms im Nur-Lese-Speicherbereich, Aufruf des Serviceprogramms durch das Steuerprogramm in,regelmäßigen Abständen, Aufruf des Überprüfungsprogramms durch das Serviceprogramm, Rücksetzen eines Zählers durch das Serviceprogramm bei Aufruf durch das Steuerprogramm, Überprüfen wenigstens eines Teiles des wiederbeschreibbaren Speicherbereiches durch das Überprüfungsprogramm, Auslösen eines RESET durch das Überprüfungsprogramm bei Manipulation des überprüften Speicherbereiches oder durch den Zähler bei Überlauf des Zählers.

Das erfindungsgemäße Verfahren zeichnet sich dadurch aus, dass die Codesequenz zur Überprüfung des Speichers (das Überprüfungsprogramm) im nur einmal beschreibbaren Speicher nicht manipuliert werden kann. Ein solcher nur einmal beschreibbarer Speicherbereich kann zum Beispiel im vorhandenen, internen wiederbeschreibbaren Speicher (Flash) realisiert werden. Einige Mikrocontroller besitzen beispielsweise einen Passwortschutz auf Teile des internen Flash. Zum anderen wird beim Verfahren gemäß der Erfindung auch die Ausführung dieser Codesequenz wirkungsvoll sichergestellt. Im jeweiligen Steuerprogramm des Steuergerätes muss in regelmäßigen Abständen, die einstellbar sein können, ein Aufruf des Überprüfungsprogramms enthalten sein. Das Überprüfungsprogramm wird mittels eines Serviceprogramms aufgerufen, welches im Nur-Lese-Speicher gespeichert ist. Dieses Serviceprogramm ist somit vor unerlaubten Eingriffen und Manipulationen geschützt.

Dieses Serviceprogramm muss regelmäßig aufgerufen werden, da anderenfalls ein Zähler, der mittels einer Taktversorgung unbeeinflussbar, kontinuierlich läuft, einen Überlauf signalisiert. Der Zähler kann nicht angehalten werden, und nur durch den Aufruf des Serviceprogramms zurückgesetzt werden. Erreicht der Zähler vor dem Aufruf des Serviceprogramms einen Überlauf, erzeugt der Zähler einen RESET des Mikrocontrollers.

Der Zähler kann als separater Zählerbaustein mit einer eigenen Taktversorgung realisiert werden, der in einem geschützten Bereich innerhalb des Mikrocontrollers oder im Steuergerät angeordnet ist. Ebenso ist bei geeigneten Mikrocontrollern eine programmtechnische Implementierung denkbar. Der Überlauf des Zählers kann beispielsweise durch Erreichen des Zählerendes ausgelöst werden. Der Zeitpunkt des Erreichens des Überlaufes bestimmt den zeitlichen Abstand, nach dem das Serviceprogramm wieder aufgerufen werden muss, ohne dass der Zähler ein RESET, auslöst. Zur Einstellung eines Zeitpunktes wird ein Zähler mit einem entsprechenden Zählerende gewählt oder ein Zählerstand eingestellt, der bei Erreichen ebenfalls ein Überlauf signalisiert. Bei Aufruf des Serviceprogramms durch das Steuerprogramm wird zum einen das Überprüfungsprogramm aufgerufen und zum anderen der Zähler zurückgesetzt.

Das RESET kann beispielsweise darin bestehen, dass das Steuergerät abgeschaltet wird oder mit einem Datensatz betrieben wird, der noch eine eingeschränkte Funktion erlaubt. Dabei kann auch gleichzeitig noch ein entsprechendes Signal an andere Steuergeräte abgegeben werden. Insbesondere ist es sinnvoll, ein Warnsignal auszugeben, welches eine Aufforderung zur Reparatur des Fahrzeuges in einer Werkstatt auslöst.

Des weiteren wird die Aufgabe der Erfindung noch durch ein Steuergerät für ein Kraftfahrzeug mit einem Mikrocontroller gelöst, bei dem ein einmal beschreibbarer Speicherbereich des wiederbeschreibbaren Speicherbereiches zur Speicherung eines Überprüfungsprogramms vorgesehen ist, der Nur-Lese-Speicherbereich zur Speicherung eines Serviceprogramms vorgesehen ist, der Rechnerkern in regelmäßigen Abständen das Serviceprogramm nach Aufruf durch das Steuerprogramm verarbeitet, der Rechnerkern das Überprüfungsprogramm nach Aufruf durch das Serviceprogramm verarbeitet, ein Zähler vorgesehen ist, der durch das Serviceprogramm bei Aufruf durch das Steuerprogramm rücksetzbar ist, wenigstens ein Teil des wiederbeschreibbaren Speicherbereiches durch das Überprüfungsprogramm überprüfbar ist, ein RESET durch das Überprüfungsprogramm bei Manipulation des überprüften Speicherbereiches oder bei Überlauf des Zählers auslösbar ist.

Besonders bevorzugte Ausgestaltungen der Erfindung sind auch noch in den abhängigen Ansprüchen angegeben.

### ZEICHNUNGEN

Im folgenden wird ein Ausführungsbeispiel der Erfindung anhand von zwei Zeichnungen näher erläutert. Dabei zeigen
- Figur 1:: ein Blockdiagramm eines erfindungsgemäßen Mikrocontrollers für ein Steuergerät und
- Figur 2:: ein Ablaufdiagramm des erfindungsgemäßen Verfahrens.

### BESCHREIBUNG DER AUSFÜHRUNGSBEISPIELE

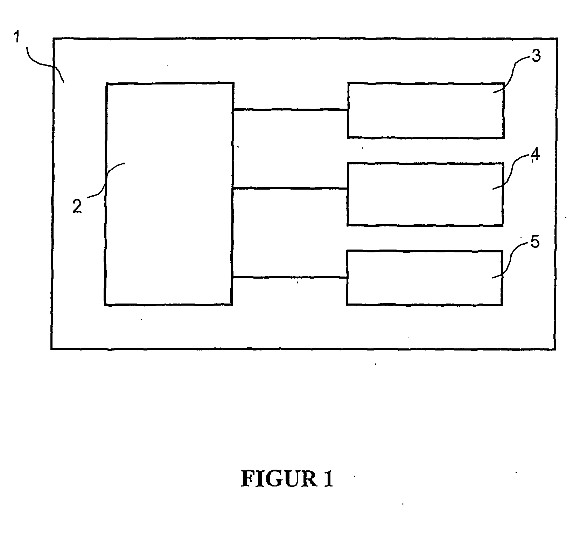

In der Figur 1 ist ein Mikrocontroller 1 für ein Steuergerät gemäß der Erfindung dargestellt. Er umfasst einen Rechnerkern 2, einen Nur-Lese-Speicher 3, einen nur einmal beschreibbaren Speicher 4 und einen wiederbeschreibbaren Speicher 5. Das Steuergerät kann beispielsweise ein Motorsteuergerät zur Steuerung von Drosselklappe, einzuspritzender Kraftstoffmenge oder anderer Größen sein. Aber auch ein Steuergerät zur Steuerung eines Getriebes, ABS-Systems oder anderer Systeme im Kraftfahrzeug ist ohne weiteres denkbar. Der Rechnerkern 1 ist ein üblicher Mikroprozessor zur Verarbeitung der gespeicherten Programme und Daten. Der Nur-Lese-Speicher oder ROM (Read Only Memory) 3 enthält ein fest gespeichertes Programm, welches nur durch Austausch des ROM 3 geändert werden kann. In diesem Speicher ist in der Regel ein Minimalprogramm abgelegt, welches den Rechnerkern 1 in die Lage versetzt, Programme und Daten aus den weiteren Speichern zu verarbeiten.

Der wiederbeschreibbare Speicher 5 ist meist als EPROM oder Flash-EPROM ausgeführt und enthält veränderbare Programme und Daten des Steuergerätes. Der nur einmal beschreibbare Speicher 4 ist ein Speicherbereich des wiederbeschreibbaren Speichers 5 (Flash), der durch ein Passwort geschützt ist. In diesem Speicherbereich 4 ist eine Codesequenz gespeichert, welche die Aufgabe hat, die Code- und Datenbereiche des Mikrocontrollers 1 zu überprüfen. Dieses Überprüfungsprogramm ergreift bei erkannter Manipulation eine Gegenmaßnahme, die meist im Auslösen eines RESET besteht. Dabei kann das Ausmaß des RESET an die jeweils gewünschte Gegenmaßnahme angepasst werden. Das Steuergerät kann beispielsweise komplett abgeschaltet werden, was bei einem Motorsteuergerät zu einem sofortigen Stillstand des Fahrzeuges führt. Oder das Steuergerät kann mit einer Minimalkonfiguration versorgt werden, so dass das Steuergerät funktionsbereit bleibt, jedoch zu einer vollständigen Funktionsfähigkeit eine Reparatur in einer Werkstatt erforderlich ist.

Die verschiedenen Speicherbereiche sind in der Figur 1 getrennt gezeichnet, wodurch jedoch nur ihre unterschiedliche Funktion gekennzeichnet werden soll. Es ist unter Wahrung der unterschiedlichen Funktionalität möglich, die Speicherbereiche durch getrennte Bausteine oder in gemeinsamen Bausteinen zu realisieren. So kann insbesondere der Flash-Speicher 5 sowohl innerhalb des Mikrocontrollerbausteins realisiert sein, als auch als externer Speicherbaustein.

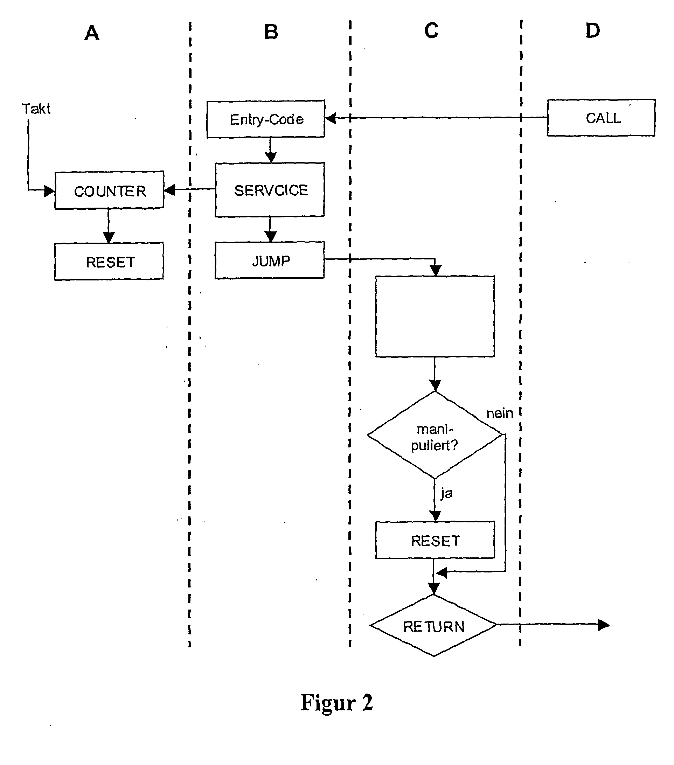

In der Figur 2 ist der Ablauf des Verfahrens gemäß der Erfindung schematisch dargestellt. Die Bereiche A, B, C und D kennzeichnen die funktionell unterschiedlichen Speicherbereiche, in denen die jeweiligen Programme und Daten abgelegt sind. Im dargestellten Ausführungsbeispiel beschreibt A einen Hardwarebereich im Mikrocontroller, B einen ROM-Bereich im Mikrocontroller und C einen Flash-Bereich im Mikrocontroller, während D einen externen Flash-Speicherbereich darstellt.

Im externen Flash D ist als Anwendungscode ein Steuerprogramm für das Steuergerät gespeichert. Das Programm enthält im Code einen ,CALL'-Befehl, mit dem ein Serviceprogramm aufgerufen wird, welches im ROM-Speicherbereich B des Mikrocontrollers abgelegt ist. Bei einem entsprechenden Entry-Code wird ein ,SERVICE' im Serviceprogramm ausgelöst. Dieses Serviceprogramm löst zwei Dinge aus, zum einen wird ein Zähler ,COUNTER' zurückgesetzt, der als Zählerbaustein im Mikrocontroller A realisiert ist. Der Zählerbaustein ist mit einer Taktleitung verbunden, so dass er unabhängig kontinuierlich läuft. Bei Erreichen eines maximalen Zählerstandes wird ein Überlauf signalisiert. Zum anderen wird gleichzeitig ein Sprung ,JUMP' in ein Überprüfungsprogramm ausgelöst. Dieses Überprüfungsprogramm ist als Codesequenz im nur einmal beschreibbaren Speicherbereich im internen Flash gespeichert. Der interne Flash des Mikrocontrollers besitzt dazu einen Bereich, welcher durch ein Passwort geschützt und damit nur einmal beschreibbar ist.

Das Überprüfungsprogramm überprüft mindestens einen Teil des vom Mikrocontroller verwendeten Speichers mittels bekannter Prüfmethoden, wie beispielsweise Checksummenbildung. Wenn anhand der Überprüfung eine Manipulation an den gespeicherten Daten und / oder Programmen festgestellt wird, wird ein RESET ausgelöst. Wenn keine unerlaubte Veränderung festgestellt wird, wird mittels eines ,RETURN'-Befehls wieder zum Steuerprogramm zurückgekehrt.

Wenn der Zähler einen Überlauf signalisiert, dass heißt eine definierte Zeit abgelaufen ist, wird ebenfalls ein RESET ausgelöst. Dieses RESET kann wahlweise bedeuten, dass das Steuergerät komplett abgeschaltet wird oder das Steuergerät unter Verwendung von vorher definierten Parametern betrieben wird. Dabei handelt es sich um eine Minimalkonfiguration, die eine Funktionalität des Steuergerätes noch gewährleistet, aber eine Reparatur in einer Werkstatt umgehend erforderlich macht. Der RESET bleibt so lange aktiv, bis das Gerät aus- und wieder eingeschaltet wird (sogenannter Power-On RESET).

Da der Zähler unbeeinflusst kontinuierlich läuft, kann das Erreichen des Überlaufes und das damit zwingend verbundene RESET des Steuergerätes nur verhindert werden, wenn der Zähler regelmäßig zurückgesetzt wird. Da dies nur vom Serviceprogramm im ebenfalls nicht manipulierbaren ROM-Bereich B ausgelöst werden kann, muss wiederum das Serviceprogramm regelmäßig vom Steuerprogramm aufgerufen werden. Daher kann das Steuerprogramm, welches den ,CALL'-Befehl enthalten muss, im relativ ungeschützten Flash-Bereich D gespeichert sein. Denn auch durch Manipulationen kann folglich mit diesem Verfahren eine Überprüfung des Speichers des Mikrocontrollers nicht verhindert werden. Nur bei nicht manipulierten Speichern des Mikrocontrollers ist eine dauerhafte Funktionalität des Steuergerätes gewährleistet.

Das erfindungsgemäße Verfahren bietet gegenüber bekannten Verfahren einige Vorteile. So entstehen nur sehr geringe oder keine Mehrkosten für den Controller-Chip, da nur ein minimaler Mehraufwand notwendig ist. Weiterhin kann das Überprüfungsprogramm individuell an Anforderungen oder Bedürfnisse angepasst werden, da diese Codesequenz nicht in der ROM-Maske enthalten ist. Somit kann es auch kundenspezifisch gehalten werden. Darüber hinaus kann der Controllerhersteller diese Funktionalität auch anderen Kunden anbieten.

Es kann für Systeme ohne Controller-internes Flash das gleiche Verfahren angewendet werden. Dieses Verfahren behebt somit den Nachteil des geringeren Schutzes für Systeme mit internem und externem Flash und ist in Kombination mit einer Paarung von Bauelementen ein sehr sicheres Verfahren. Obwohl der wiederbeschreibbare. Speicherbereich beim obigen Ausführungsbeispiel innerhalb des Mikrocontrollers liegt, kann er selbstverständlich auch außerhalb liegen.

### BEZUGSZEICHENLISTE:

| | |
|---|---|
| 1 | Mikrocontroller |
| 2 | Rechnerkern |
| 3 | Nur-Lese-Speicherbereich |
| 4 | beschreibbarer Speicherbereich |
| 5 | wiederbeschreibbarer Speicherbereich |

## Patentansprüche

1. Verfahren zur Steuerung eines Mikrocontrollers (1) in einem Steuergerät in einem Kraftfahrzeug mit einem Rechnerkern (2), wenigstens einem Nur-Lese-Speicherbereich (3) und wenigstens einem wiederbeschreibbaren Speicherbereich (5), wobei in dem wiederbeschreibbaren Speicherbereich (5) zumindest ein Steuerprogramm gespeichert ist, welches zur Verarbeitung durch den Rechnerkern (2) vorgesehen ist, umfassend mindestens die Schritte,
- Speicherung eines Überprüfungsprogramms in einem einmal beschreibbaren Speicherbereich (4) des wiederbeschreibbaren Speicherbereiches (5),
- Speicherung eines Serviceprogramms im Nur-Lese-Speicherbereich (3),
- Aufruf des Serviceprogramms durch das Steuerprogramm in regelmäßigen Abständen,
- Aufruf des Überprüfungsprogramms durch das Serviceprogramm,
- Rücksetzen eines Zählers ,der mittels einer Taktversorgung kontinuierlich läuft, durch das Serviceprogramm bei Aufruf durch das Steuerprogramm,
- Überprüfen wenigstens eines Teiles des wiederbeschreibbaren Speicherbereiches durch das Überprüfungsprogramm,
- Auslösen eines RESET durch das Überprüfungsprogramm bei Manipulation des überprüften Speicherbereiches oder durch den Zähler bei Überlauf des Zählers.

2. Verfahren nach Anspruch 1, **dadurch gekennzeichnet, dass** das Steuerprogramm in einem internen Speicherbereich des Mikrocontrollers (1) gespeichert wird.

3. Verfahren nach Anspruch 1, **dadurch gekennzeichnet, dass** das Steuerprogramm in einem externen Speicherbereich außerhalb des Mikrocontrollers (1) gespeichert wird.

4. Verfahren nach Anspruch 1, **dadurch gekennzeichnet, dass** das Überprüfungsprogramm in einem internen Speicherbereich des Mikrocontrollers (1) gespeichert wird.

5. Verfahren nach Anspruch 4, **dadurch gekennzeichnet, dass** das Überprüfungsprogramm in einem internen Speicherbereich des Mikrocontrollers (1) gespeichert wird, welcher durch ein Passwort geschützt ist.

6. Steuergerät für ein Kraftfahrzeug mit einem Mikrocontroller (1) mit einem Rechnerkern (2), wenigstens einem Nur-Lese-Speicherbereich (3) und wenigstens einem wiederbeschreibbaren Speicherbereich (5), wobei in dem wiederbeschreibbaren Speicherbereich (5) zumindest ein Steuerprogramm gespeichert ist, welches zur Verarbeitung durch den Rechnerkern (2) vorgesehen ist, wobei
- ein einmal beschreibbarer Speicherbereich (4) des wiederbeschreibbaren Speicherbereiches (5) zur Speicherung eines Überprüfungsprogramms vorgesehen ist,
- der Nur-Lese-Speicherbereich (3) zur Speicherung eines Serviceprogramms vorgesehen ist,
- der Rechnerkern (2) das Serviceprogramm nach Aufruf durch das Steuerprogramm in regelmäßigen Abständen verarbeitet,
- der Rechnerkern (2) das Überprüfungsprogramm nach Aufruf durch das Serviceprogramm verarbeitet,
- ein Zähler vorgesehen ist, der mittels einer Taktversorgung kontinuierlich läuft und durch das Serviceprogramm bei Aufruf durch das Steuerprogramm rückgesetzt wird,
- wenigstens ein Teil des wiederbeschreibbaren Speicherbereiches (5) durch das Überprüfungsprogramm überprüfbar ist,
- ein RESET durch das Überprüfungsprogramm bei Manipulation des überprüften Speicherbereiches oder bei Überlauf des Zählers auslösbar ist.

7. Steuergerät nach Anspruch 6, **dadurch gekennzeichnet, dass** der einmal beschreibbare Speicherbereich (4) innerhalb des Mikrocontrollers (1) angeordnet ist.

8. Steuergerät nach Anspruch 6, **dadurch gekennzeichnet, dass** der wiederbeschreibbare Speicherbereich (5) als Flash-Speicher ausgebildet ist.

## Claims

1. Method for controlling a microcontroller (1) in a control unit in a motor vehicle with a computer core (2), at least one read-only memory area (3) and at least one rewritable memory area (5), at least one control program which is intended to be processed by the computer core (2) being stored in the rewritable memory area (5), said method comprising at least the following steps
- a checking program is stored in a write-once memory area (4) of the rewritable memory area (5),
- a service program is stored in the read-only memory area (3),
- the service program is called by the control program at regular intervals,
- the checking program is called by the service program,
- a counter which runs continuously using a clock supply is reset by the service program when the latter is called by the service program,
- at least part of the rewritable memory area is checked by the checking program,
- a RESET is triggered by the checking program when the checked memory area is manipulated or by the counter when the counter overflows.

2. Method according to Claim 1, **characterized in that** the control program is stored in an internal memory area of the microcontroller (1).

3. Method according to Claim 1, **characterized in that** the control program is stored in an external memory area outside the microcontroller (1).

4. Method according to Claim 1, **characterized in that** the checking program is stored in an internal memory area of the microcontroller (1).

5. Method according to Claim 4, **characterized in that** the checking program is stored in an internal memory area of the microcontroller (1), which memory area is protected by a password.

6. Control unit for a motor vehicle having a microcontroller (1) with a computer core (2), at least one read-only memory area (3) and at least one rewritable memory area (5), at least one control program which is intended to be processed by the computer core (2) being stored in the rewritable memory area (5),
- a write-once memory area (4) of the rewritable memory area (5) being intended to store a checking program,
- the read-only memory area (3) being intended to store a service program,
- the computer core (2) processing the service program after the latter has been called by the control program at regular intervals,
- the computer core (2) processing the checking program after the latter has been called by the service program,
- provision being made of a counter which runs continuously using a clock supply and is reset by the service program when the latter is called by the control program,
- at least part of the rewritable memory area (5) being able to be checked by the checking program,
- a RESET being able to be triggered by the checking program when the checked memory area is manipulated or when the counter overflows.

7. Control unit according to Claim 6, **characterized in that** the write-once memory area (4) is arranged inside the microcontroller (1).

8. Control unit according to Claim 6, **characterized in that** the rewritable memory area (5) is in the form of a flash memory.

## Revendications

1. Procédé de commande d'un microcontrôleur (1) d'un appareil de commande équipant un véhicule automobile, comprenant une base de calculateur (2), au moins une zone de mémoire à lecture seule (3) et au moins une zone de mémoire réinscriptible (5),
cette zone de mémoire réinscriptible (5) contenant au moins un programme de commande destiné à être traité par la base de calculateur (2), procédé comprenant au moins les étapes suivantes :
- enregistrement d'un programme de contrôle dans une zone de mémoire (4) inscriptible une fois dans la zone de mémoire réinscriptible (5),
- enregistrement d'un programme de service dans la zone de mémoire à lecture seule (3),
- appel du programme de service par le programme de commande à des intervalles réguliers,
- appel du programme de contrôle par le programme de service,
- remise à l'état initial d'un compteur qui fonctionne alimenté par une horloge, par le programme de service lors de l'appel par le programme de commande,
- contrôle d'au moins une partie de la zone de mémoire réinscriptible à l'aide du programme de contrôle,
- déclenchement d'une remise à l'état initial (RESET) par le programme de contrôle par manipulation de la zone de mémoire contrôlée ou par le compteur en cas de débordement du compteur.

2. Procédé selon la revendication 1,
**caractérisé en ce qu'**
on enregistre le programme de commande dans une zone de mémoire interne du microcontrôleur (1).

3. Procédé selon la revendication 1,
**caractérisé en ce qu'**
on enregistre le programme de commande dans une zone de mémoire externe à l'extérieur du microcontrôleur (1).

4. Procédé selon la revendication 1,
**caractérisé en ce qu'**
on enregistre le programme de contrôle dans une zone de mémoire interne du microcontrôleur (1).

5. Procédé selon la revendication 4,
**caractérisé en ce qu'**
on enregistre le programme de contrôle dans une zone de mémoire interne du microcontrôleur (1), protégée par un mot de passe.

6. Appareil de commande d'un véhicule automobile comprenant un microcontrôleur (1) avec une base de calculateur (2), au moins une zone de mémoire de lecture seule (3) et au moins une zone de mémoire réinscriptible (5),
la zone de mémoire réinscriptible (5) contenant au moins un programme de commande destiné à être traité par la base de calculateur (2), a une zone de mémoire inscriptible une seule fois (4) pour enregistrer un programme de contrôle,
- la zone de mémoire à lecture seule (3) est destinée à enregistrer un programme de service,
- la base de calculateur (2) traite, à intervalles réguliers, le programme de service par appel du programme de commande,
- la base de calculateur (2) traite le programme de contrôle après appel par le programme de service,
- un compteur tournant en continu, alimenté par une horloge, est remis à l'état initial par le programme de service lors de l'appel par le programme de commande,
- au moins une partie de la zone de mémoire réinscriptible (5) est vérifiée par le programme de contrôle,
- une remise à l'état initial (RESET) est déclenchée par le programme de débordement en cas de manipulation de la zone de mémoire contrôlée ou en cas de dépassement de compteur.

7. Appareil de commande selon la revendication 6,
**caractérisé en ce que**
la zone de mémoire inscriptible une fois (4) se trouve dans le microcontrôleur (1).

8. Appareil de commande selon la revendication 6,
**caractérisé en ce que**
la zone de mémoire réinscriptible (5) est une mémoire flash.
